# EUROPÄISCHE PATENTSCHRIFT

(11) **EP 0 504 661 B1**
(45) Veröffentlichungstag und Bekanntmachung des Hinweises auf die Patenterteilung: **07.02.1996**
(21) Anmeldenummer: 92103714.9
(22) Anmeldetag: 05.03.1992
(51) Int. Cl.: C08F 10/02, C08F 4/609

(54) **Ziegler-Katalysatorsystem**
Ziegler catalyst system
Système catalytique du type Ziegler

(30) Priorität: 21.03.1991 DE 4109223
(43) Veröffentlichungstag der Anmeldung: 23.09.1992
(73) Patentinhaber: BASF Aktiengesellschaft, D-67063 Ludwigshafen (DE)
(72) Erfinder: Bueschges, Ulrich, Dr., W-6706 Wachenheim (DE); Saive, Roland, Dr., W-6700 Ludwigshafen (DE); Funk, Guido, Dr., W-6520 Worms 1 (DE)

(56) Entgegenhaltungen:
- US-A- 3 385 841
- US-A- 4 267 292

## Beschreibung

Die Vorliegende Erfindung betrifft ein Ziegler-Katalysatorsystem für ein Verfahren zur Herstellung von Homopolymerisaten des Ethylens und von Copolymerisaten des Ethylens mit untergeordneten Mengen an C₃- bis C₈-, insbesondere C₄- bis C₆-α-Monoolefinen durch (Co)Polymerisation der Monomeren bei Temperaturen von 30 bis 200, insbesondere 50 bis 100°C, und Drücken von 1 bis 200 bar, wobei das Ziegler-Katalysatorsystem aus
A) einer Übergangsmetall-Katalysatorkomponente,
B) einer Organoaluminium-Katalysatorkomponente der allgemeinen Formel I,

   AlRₘX₃₋ₘ (I)

   worin der Index und die Variablen die folgende Bedeutung haben:
   - R: C₁- bis C₁₈-Kohlenwasserstoffrest,
   - X: Rest OR, Chlor, Brom und Wasserstoff und
   - m: Zahl von 1 bis 3;
   und
C) einer Organohalogen-Katalysatorkomponente
besteht.

Ziegler-Katalysatorsysteme (A, B, C) der genannten Art und (Co)Polymerisationsverfahren für Ethylen, bei denen sie verwendet werden, sind beispielsweise aus der EP-A-0 166 888 oder der US-A-4 578 374 und der US-A-3 385 841 bekannt.

Die darin beschriebenen Ziegler-Katalysatorsysteme (A, B, C) enthalten als Katalysatorkomponente (C) insbesondere Tetrachlorkohlenstoff, Chloroform, Methylenchlorid, Tetrabromkohlenstoff, Bromoform, Trichlorfluormethan, Difluordichlormethan oder Trifluorchlormethan (EP-A-0 166 888; US-A-3 385 841) oder Chloroform, Trichlorfluormethan, Methylenchlorid, Ethyltrichloracetat, Methyltrichloracetat, Hexachlorpropylen, Butylperchlorcrotonat, 1,3-Dichlorpropan, 1,2,3-Trichlorpropan oder 1,1,2-Trichlortrifluorethan (US-A-4 578 374).

Diese beispielhaft genannten und auch andere bekannte Ziegler-Katalysatorsysteme (A, B, C) weisen eine gute Produktivität auf und erlauben in gewissem Umfang die Herstellung von Homo- und (Co)Polymerisaten des Ethylens mit gezielt einstellbarer breiter Molmassenverteilung und guter Kornbeschaffenheit der betreffenden Produkte. Um einerseits bei den bekannten ziegler-Katalysatorsystemen (A, B, C) die optimale Produktivität zu erzielen und andererseits vorteilhafte Eigenschaftsprofile der hiermit hergestellten Ethylenhomopolymerisate und -copolymerisate einzustellen, müssen vergleichsweise hohe Mengen der Katalysatorkomponente (C) verwendet werden. Hieraus resultieren Nachteile hinsichtlich der Wirtschaftlichkeit der (Co)Polymerisationsverfahren, des Chlorgehalts in den (Co)Polymerisaten und des Gehalts an Halogenkohlenwasserstoffen im Abgas der Polymerisationsanlagen. Des weiteren hat man Probleme bei der Umstellung von sogenannten Swing-Anlagen, in denen im Wechsel unterschiedliche Produkte hergestellt werden, von bekannten Ziegler-Katalysatorsystemen (A, B, C) auf solche Katalysatorsysteme, welche durch die Katalysatorkomponente (C) in ihrer Produktivität sowie in ihrer Fähigkeit, die Molmasse, die Molmassenverteilung und die Morphologie der (Co)Polymerisate zu regeln, nachteilig beeinflußt werden, was sich wiederum negativ auf die Wirtschaftlichkeit der Swing-Anlage insgesamt auswirkt.

Aufgabe der vorliegenden Erfindung war es, ein Ziegler-Katalysatorsystem (A, B, C) zu finden, welches die Nachteile des Standes der Technik nicht mehr länger aufweist, mit wesentlich geringeren Mengen an Katalysatorkomponente (C) auskommt, dabei eine optimale Produktivität aufweist und ein unverändert vorteilhaftes Eigenschaftsprofil der hergestellten Ethylenhomopolymerisate und -copolymerisate bewirkt.

Überraschenderweise konnte die Aufgabe durch die Verwendung von 1,1,1-Trichlorethan in bestimmten, genau definierten Mengen als Katalysatorkomponente (C) gelöst werden. Im Hinblick auf den Stand der Technik war es nicht vorhersagbar, daß aufgrund der Verwendung dieser Verbindung der Anteil der Katalysatorkomponente (C) in Ziegler-Katalysatorsystemen (A, B, C) deutlich verringert werden kann. Noch weniger vorhersagbar und deshalb umso mehr überraschend war der Befund, daß mit Hilfe von 1,1,1-Trichlorethan die üblicherweise verwendeten wirksamen Mengen des Chloroforms in der Katalysatorkomponente (C) drastisch abgesenkt werden können.

Demnach handelt es sich bei dem Gegenstand der vorliegenden Erfindung um ein neues Ziegler-Katalysatorsystem (A, B, C) für die Homo- und Copolymerisation des Ethylens, welches aus
A) einer Übergangsmetall-Katalysatorkomponente,
B) einer Organoaluminium-Katalysatorkomponente der allgemeinen Formel I,

   AlRₘX₃₋ₘ (I)

   worin der Index und die Variablen die folgende Bedeutung haben:
   - R: C₁- bis C₁₈-Kohlenwasserstoffrest,
   - X: Rest OR, Chlor, Brom und Wasserstoff und
   - m: Zahl von 1 bis 3;
   und
C) einer Organohalogen-Katalysatorkomponente
besteht und welches dadurch gekennzeichnet ist, daß seine Katalysatorkomponente (C) 1,1,1-Trichlorethan enthält oder hieraus besteht, wobei das Atomverhältnis von Übergangsmetall aus der Katalysatorkomponente (A) zu Aluminium aus der Katalysatorkomponente (B) im Bereich von 1:0,5 bis 1:100 und das Molverhältnis von Katalysatorkomponente (B) zu Katalysatorkomponente (C) bei 1:0,003 bis 1:0,3 liegt.

Der erfindungsgemäß wesentliche Bestandteil des erfindungsgemäßen Ziegler-Katalysatorsystems (A, B, C) ist 1,1,1-Trichlorethan. Diese Verbindung ist als sogenannter Promotor in der neuen Katalysatorkomponente (C) enthalten. Hierbei ist es erfindungsgemäß von Vorteil, wenn die Verbindung in einer Menge von mindestens 25 Mol.% in der neuen Katalysatorkomponente (C) enthalten ist. Daneben kann die neue Katalysatorkomponente (C) noch an sich bekannte Organohalogenverbindungen als Promotoren enthalten.

Erfindungsgemäß ist es von Vorteil, wenn die neue Katalysatorkomponente (C) des erfindungsgemäßen Ziegler-Katalysatorsystems (A, B, C) noch Chloroform enthält. Hierbei ist es erfindungsgemäß von ganz besonderem Vorteil, wenn die neue Katalysatorkomponente (C) nur aus 1,1,1-Trichlorethan und Chloroform besteht. Ganz besondere Vorteile ergeben sich wenn diese beiden Promotoren im Molverhältnis von 1:3 bis 3:1 vorliegen. Es mag vereinzelt möglich sein, andere Molverhältnisse anzuwenden, indes stellen sich dann in den allermeisten Fällen die erfindungsgemäß zu erzielenden Vorteile nicht mehr zuverlässig ein. Bei den Molverhältnissen von 1:3 bis 3:1 handelt es sich demnach um einen optimalen Bereich, innerhalb dessen das Molverhältnis von 1,1,1-Trichlorethan und Chloroform variiert und dem jeweils verwendeten erfindungsgemäßen Ziegler-Katalysatorsystem (A, B, C) in vorteilhafter Weise angepaßt werden kann.

Innerhalb dieses optimalen Bereichs sind die Molverhältnisse besonders vorteilhaft, welche bei 1:1,5 bis 1,86:1 liegen, weil die erfindungsgemäßen Ziegler-Katalysatorsysteme (A, B, C), deren Katalysatorkomponente (C) 1,1,1-Trichlorethan und Chloroform in diesen Molverhältnissen enthalten, hinsichtlich der Produktivität und des Eigenschaftsprofils der resultierenden Ethylenhomopolymerisate und -copolymerisate besondere Vorteile aufweisen. Diese Vorteile sind besonders ausgeprägt, wenn Molverhältnisse im Bereich von 1:1,2 bis 1,2:1 angewandt werden. Erfindungsgemäß werden deshalb die neuen Katalysatorkomponenten (C), welche aus 1,1,1-Trichlorethan und Chloroform in diesen Molverhältnissen bestehen, ganz besonders bevorzugt in den erfindungsgemäßen Ziegler-Katalysatorsystemen (A, B, C) angewandt.

Erfindungsgemäß kann die neue Katalysatorkomponente (C) auch alleine aus 1,1,1-Trichlorethan bestehen, ohne daß die erfindungsgemäß zu erzielenden Vorteile geschmälert werden.

Welche neue Katalysatorkomponente (C) als Promotor in dem erfindungsgemäßen Ziegler-Katalysatorsystem (A, B, C) zur Anwendung kommt, richtet sich zum einen nach der speziellen Zusammensetzung der übrigen beiden Katalysatorkomponenten (A) und (B) und zum anderen nach dem Eigenschaftsprofil, welches das herzustellende Ethylenhomopolymerisat oder -copolymerisat haben soll, sowie nach dem (Co)Polymerisationsverfahren und der Polymerisationsanlage, welche angewandt werden. Hierbei kann der Fachmann die jeweilige optimale Zusammensetzung des erfindungsgemäßen Ziegler-Katalysatorsystems (A, B, C) aufgrund seines Fachwissens angeben oder anhand einfacher Vorversuche ermitteln.

Unabhängig davon, ob man eine neue Katalysatorkomponente (C) aus 1,1,1-Trichlorethan oder aus einem der vorstehend im Detail beschriebenen Gemische verwendet, liegt das Atomverhältnis von Übergangsmetall aus der Katalysatorkomponente (A) zu Aluminium aus der Katalysatorkomponente (B) erfindungsgemäß im Bereich von 1:0,5 bis 1:100. Es ist zwar möglich Atomverhältnisse anzuwenden, welche außerhalb dieses Bereichs liegen. Indes stellen sich dann die erfindungsgemäß zu erzielenden Vorteile nicht mehr zuverlässig ein. Insbesondere läßt die Reproduzierbarkeit des Eigenschaftsprofils der Ethylenhomopolymerisate und -copolymerisate sehr zu wünschen übrig. Bei den Atomverhältnissen von 1:0,5 bis 1:100 handelt es sich demnach um einen optimalen Bereich, innerhalb dessen die Atomverhältnisse von Übergangsmetall zu Aluminium breit variiert und den jeweiligen übrigen Verfahrensparametern angepaßt werden können. Innerhalb dieses optimalen Bereichs sind Atomverhältnisse von 1:0,8 bis 1:90 besonders vorteilhaft, weil die erfindungsgemäßen Ziegler-Katalysatorsysteme (A, B, C), welche die Übergangsmetalle und Aluminium in diesen Atomverhältnissen enthalten, in ihrer Produktivität und hinsichtlich der Molmasse, der Molmassenverteilung und der Morphologie der hiermit hergestellten Ethylenhomopolymerisate und -copolymerisate besondere Vorteile haben. Innerhalb dieses besonders bevorzugten Bereichs ist derjenige von 1:1 bis 1:50 hervorzuheben, weil die betreffenden erfindungsgemäßen Ziegler-Katalysatorsysteme (A, B, C) herausragende Resultate liefern. Diese erfindungsgemäßen Ziegler-Katalysatorsysteme (A, B, C) werden deshalb ganz besonders bevorzugt verwendet.

Unabhängig davon, welche Zusammensetzung die neue Katalysatorkomponente (C) im einzelnen hat und welche Atomverhältnisse von Übergangsmetall aus der Katalysatorkomponente (A) zu Aluminium aus der Katalysatorkomponente (B) angewandt werden, liegt in dem erfindungsgemäßen Ziegler-Katalysatorsystem (A, B, C) das Molverhältnis von Katalysatorkomponente (B) zu Katalysatorkomponente (C) erfindungsgemäß bei 1:0,003 bis 1:0,3. Bei der Verwendung von Ziegler-Katalysatorsystemen (A, B, C), welche andere Molverhältnisse aufweisen, stellen sich die erfindungsgemäß zu erzielenden Vorteile nicht mehr zuverlässig ein. Bei den Molverhältnissen von 1:0,003 bis 1:0,3 handelt es sich demnach um einen optimalen Bereich, innerhalb dessen das Molverhältnis von Katalysatorkomponente (B) zu neuer Katalysatorkomponente (C) breit variiert und den übrigen Verfahrensparametern hervorragend angepaßt werden kann. Hierbei hat es sich als besonders vorteilhaft erwiesen, Molverhältnisse von 1:0,003 bis 1:0,2, insbesondere 1:0,005 bis 1:0,1, anzuwenden, weil hierdurch erfindungsgemäße Ziegler-Katalysatorsysteme (A, B, C) resultieren, welche Ethylenhomopolymerisate und -copolymerisate mit einem ganz besonders vorteilhaften Eigenschaftsprofil liefern.

Dasjenige erfindungsgemäße Ziegler-Katalysatorsystem (A, B, C), dessen neue Katalysatorkomponente (C) entweder aus 1,1,1-Trichlorethan oder aus dem Gemisch dieser Verbindung mit Chloroform im Molverhältnis von 1:1,2 bis 1,2:1 besteht und welches das Atomverhältnis von Übergangsmetall aus der Katalysatorkomponente (A) zu Aluminium aus der Katalysatorkomponente (B) im Bereich von 1:1 bis 1:50 sowie ein Molverhältnis von Katalysatorkomponente (B) zu neuer Katalysatorkomponente (C) von 1:0,005 bis 1:0,1 aufweist, liefert, was die Verfahrensdurchführung als solche und die Produkteigenschaften betrifft, die besten Ergebnisse.

Der weitere wesentliche Bestandteil des erfindungsgemäßen Ziegler-Katalysatorsystems (A, B, C) ist die Katalysatorkomponente (A), welche mindestens ein Übergangsmetall enthält. Katalysatorkomponenten (A) dieser Art sind üblich und bekannt und werden beispielsweise in den Patentschriften EP-A-0 166 888, EP-A-0 211 624, EP-A-0 057 589, EP-A-0 129 312, EP-A-0 237 294, US-A-4 128 607, US-A-4 578 374, US-A-3 723 348 oder GB-A-1 309 565 beschrieben. Hierbei erweist es sich als weiterer besonderer Vorteil der neuen Katalysatorkomponente (C), daß sie zusammen mit so vielen bekannten Katalysatorkomponenten (A) ihre vorteilhafte Wirkung entfaltet.

Der dritte wesentliche Bestandteil des erfindungsgemäßen Ziegler-Katalysatorsystems (A, B, C) ist die Organoaluminium-Katalysatorkomponente (B) der allgemeinen Formel I.

Beispiele geeigneter erfindungsgemäß anzuwendender Reste R in der allgemeinen Formel I sind Methyl, Ethyl, n-Propyl, iso-Propyl, n-Butyl, iso-Butyl, n-Pentyl, n-Hexyl, n-Heptyl, n-Octyl, iso-Octyl, Nonyl, Decyl, Undecyl, Dodecyl, Tetradecyl, Pentadecyl, Hexadecyl, Pentadecyl und Octadecyl, von denen Ethyl, n-Propyl, Iso-Propyl und n-Butyl besonders vorteilhaft und iso-Propyl und n-Butyl ganz besonders vorteilhaft sind.

Beispiele geeigneter Reste OR der allgemeinen Formel I sind die Alkoxyreste, welche sich von den vorstehend genannten Kohlenwasserstoffresten ableiten.

Beispiele geeigneter, erfindungsgemäß zu verwendender Katalysatorkomponenten (B) der allgemeinen Formel I sind Triethylaluminium, Diethylaluminiumchlorid und -bromid. Ethylaluminiumdichlorid und -dibromid, Tri-n-butyl-aluminium, Di-n-butylaluminiumchlorid, n-Butylaluminiumdichlorid, Diethylaluminiumhydrid, Di-n-butylaluminiumhydrid, Diisopropylisopropoxyaluminium (Isoprenylaluminium), Tri-iso-butylaluminium, Al(C₂H₅)_{1,5}Cl_{1,5}, Al(C₂H₅)_{1,5}Br_{1,5} und Al(C₂H₅)_{1,5}(OC₂H₅)_{1,5}.

Das erfindungsgemäße Ziegler-Katalysatorsystem (A, B, C) dient der Herstellung von Homopolymerisaten des Ethylens sowie von Copolymerisaten des Ethylens mit untergeordneten Mengen an C₃- bis C₈-, insbesondere C₄- bis C₆-α-Monoolefinen durch (Co)Polymerisation der Monomeren bei Temperaturen von 30 bis 200°C, bevorzugt 50 bis 100°C, und Drücken von 1 bis 200 bar.

Beispiele geeigneter α-Monoolefine sind Propen, n-But-1-en, 4-Methyl-pent-1-en, n-Hex-1-en, n-Hept-1-en und n-Oct-1-en. Vorteilhafterweise werden sie in Mengen von 0,1 bis 10 mol-%, bezogen auf die Copolymerisate, verwendet. Die Molekulargewichte der Homo- und Copolymerisate werden dabei mit den üblichen und bekannten Reglern, insbesondere Wasserstoff, geregelt.

Als Polymerisationsverfahren kommen die Verfahren des Standes der Technik zur Homo- und Copolymerisation des Ethylens in Betracht wie beispielsweise die Suspensions- oder Trockenbettpolymerisationsverfahren im gewirbelten oder gerührten Festbett, wie sie in der US-A-3 242 150, der DE-A-32 39 883 oder der EP-A-0 004 645 beschrieben sind.

Bei diesem Polymerisationsverfahren kann das erfindungsgemäße Ziegler-Katalysatorsystem (A, B, C) in unterschiedlicher Weise in den Polymerisationsraum eingebracht werden:
So können die Katalysatorkomponenten (A), (B) und (C)
1. alle zusammen an ein und derselben Stelle des Reaktionsgefäßes,
2. getrennt voneinander an verschiedenen Stellen des Reaktionsgefäßes oder
3. als Gemisch zweier Katalysatorkomponenten an einer Stelle und die dritte Katalysatorkomponente an einer anderen Stelle des Reaktionsgefäßes
eingebracht werden.

Vorzugsweise werden die Polymerisationsverfahren kontinuierlich durchgeführt.

Die mit Hilfe des erfindungsgemäßen Ziegler-Katalysatorsystems (A, B, C) durchgeführten Homo- und Copolymerisationsverfahren weisen besondere Vorteile auf, welche auf das erfindungsgemäße Ziegler-Katalysatorsystem (A, B, C) bzw. auf die neue Katalysatorkomponente (C) zurückzuführen sind. So liefern sie bei hoher Produktivität Ethylenhomopolymerisate und -copolymerisate mit gezielt einstellbarer Molmasse und Molmassenverteilung. Darüber hinaus haben die mit Hilfe des Copolymerisationsverfahrens hergestellten Copolymerisate eine vorteilhaft ausgewogene Comonomerverteilung, d.h. die Comonomere sind in der Tat statistisch in den Copolymerisaten verteilt und liegen nicht etwa als Blöcke oder gar als separate Polymerisate vor. Sowohl die Homo- als auch die Copolymerisate weisen eine gute Morphologie, eine Kornbeschaffenheit sowie eine ausgezeichnete Verarbeitbarkeit auf. Nicht zuletzt haben sie einen geringeren Halogengehalt als Ethylenhomopolymerisate und -copolymerisate, welche mit Hilfe bekannter Ziegler-Katalysator-Systeme (A, B, C) hergestellt worden sind. Außerdem ist der Gehalt an Halogenkohlenwasserstoffen im Abgas der Polymerisationsanlagen bei der Verwendung des erfindungsgemäßen Ziegler-Katalysator-Systems (A, B, C) erheblich niedriger als bei herkömmlichen Polymerisationsverfahren. Darüber hinaus können Swing-Anlagen jederzeit ohne schwerwiegende technische Probleme von (Co)Polymerisationsverfahren, welche von dem erfindungsgemäßen Ziegler-Katalysatorsystem (A, B, C) Gebrauch machen, auf andere Polymerisationsverfahren, welche beispielsweise mit Phillips-Katalysatoren arbeiten, umgestellt werden, was die Wirtschaftlichkeit einer solchen Swing-Anlage deutlich steigert.

### Beispiele 1 und 2 und Vergleichsversuche V1 und V2

Die Herstellung eines Ethylen-But-1-en-Copolymerisats mit Hilfe erfindungsgemäßer (Beispiele 1 und 2) und bekannter (Vergleichsversuche V1 und V2) Ziegler-Katalysatorsysteme (A, B, C)

### Allgemeine Herstellvorschrift

1. Die Herstellung der übergangsmetall-Katalysatorkomponente (A)
   25,3 g Siliciumdioxid (Teilchendurchmesser: 90 bis 150 µm, Porenvolumen: 1,7 cm³/g, Oberfläche: 320 m²/g) wurden in einer Lösung aus 85 ml Tetrahydrofuran, 13,2 g VCl₃·4 Isopropanol, 0,5 g TiCl₃·1/3 AlCl₃ und 6,4 g Isobutyltrimethoxysilan suspendiert. Die resultierende Suspension wurde kurz gerührt und anschließend im Vakuum bei 70°C eingedampft.
   20 g des hierbei resultierenden feinteiligen festen Zwischenprodukts wurden in 103 g Heptan suspendiert und mit einer Lösung aus 8 g Diethylaluminiumchlorid in 17 g n-Heptan versetzt. Die erhaltene Suspension wurde kurz bei 65°C gerührt. Anschließend wurde die hierbei entstandene feinteilige feste Übergangsmetall-Katalysatorkomponente (A) abfiltriert, dreimal mit n-Heptan gewaschen und anschließend in Vakuum getrocknet. Die Elementaranalyse der Katalysatorkomponente (A) ergab einen Gehalt an übergangsmetallen von 0,9 mmol/g.
2. Ein 10 l-Autoklav wurde mit 5 l Isobutan, 0,27 l But-1-en, 8 Nl-Wasserstoff, 0,1 g Katalysatorkomponente (A), 5 mmol Tri-isobutylaluminium als Katalysatorkomponente (B) und 0,1 mmol 1,1,1-Trichlorethan (Beispiel 1), einem Gemisch aus 0,05 mmol 1,1,1-Trichlorethan und 0,05 mmol Chloroform (Beispiel 2), 2,0 mmol Trichlorfluormethan (Vergleichsversuch V1) oder 2 mmol Chloroform (Vergleichsversuch V2) als Katalysatorkomponente (C) beschickt. Die Tabelle gibt einen Überblick über die betreffenden Atom- und Molverhältnisse. Dann wurde unter Rühren und bei einem durch Regelung konstant gehaltenen Ethylenpartialdruck von 16,5 bar bei einer Temperatur von 80°C während 90 Minuten copolymerisiert. Hiernach wurde die Copolymerisation durch Entspannen des Autoklaven abgebrochen.
   Aus der hierbei erhaltenen Ausbeute an Copolymerisaten wurde die jeweilige mittlere promotorspezifische Katalysatoraktivität PSKA nach der Gleichung
   PSKA = g (Copolymerisat)/Mol(Übergangsmetall) · h · mol/l (Ethylen) · mol (Katalysatorkomponente C) errechnet.
   Die wichtigsten anwendungstechnisch relevanten Eigenschaften der hergestellten Copolymerisate wurden nach den folgenden Methoden bestimmt:
   - die intrinsische Viskosität [η] in (dl/g) nach DIN 53 720
   - der Schmelzflußindex MFI bei 190°C bei 2,16 kg Belastung in (g/10 min) nach DIN 53 735
   - die Dichte ρ (g/cm³) nach DIN 53 479.

In der Tabelle werden die Ergebnisse der erfindungsgemäßen Beispiele 1 und 2 den Ergebnissen der Vergleichsversuche V1 und V2 gegenübergestellt. Der Vergleich untermauert die Vorteilhaftigkeit der erfindungsgemäßen Ziegler-Katalysatorsysteme (A, B, C) bzw. der neuen Katalysatorkomponente (C).

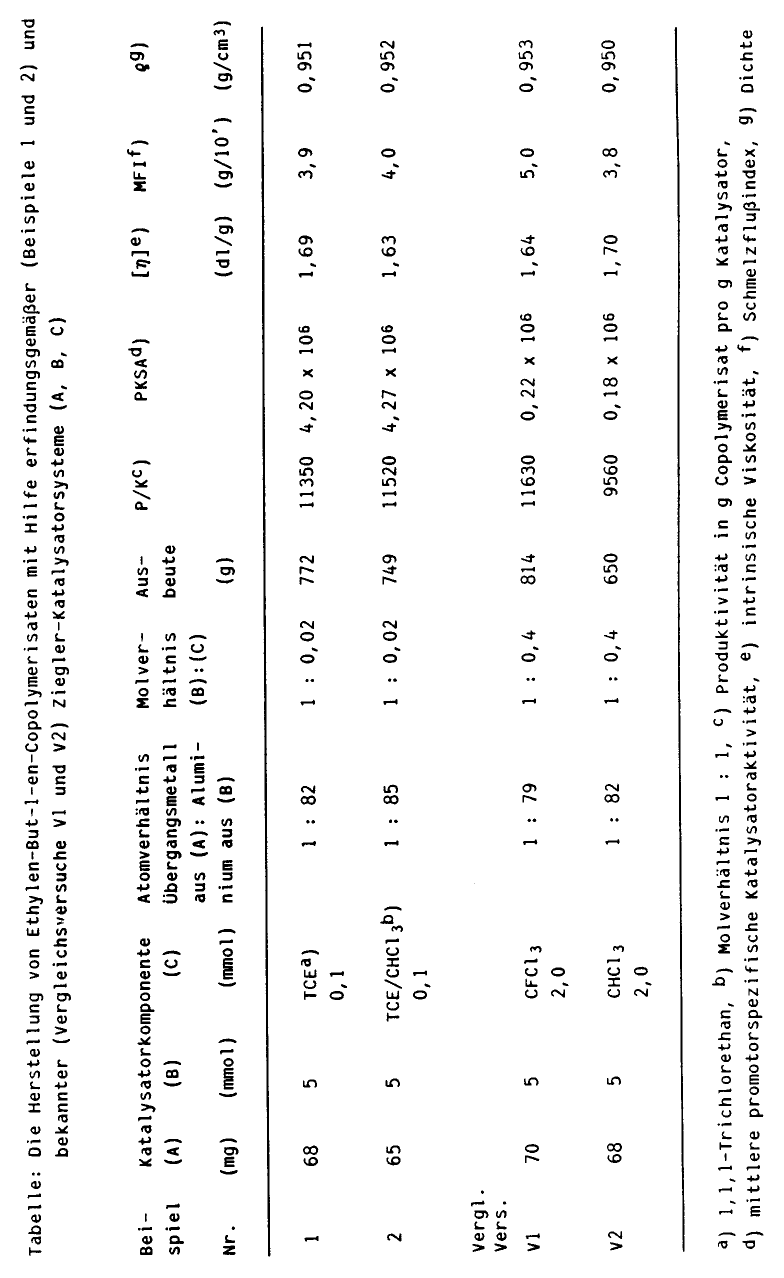

## Patentansprüche (Patentansprüche für folgende(n) Vertragsstaat(en): BE, DE, FR, GB, IT, NL, SE)

1. Ziegler-Katalysatorsystem für die Homo- und Copolymerisation des Ethylens, welches aus
A) einer Übergangsmetall-Katalysatorkomponente,
B) einer Organoaluminium-Katalysatorkomponente der allgemeinen Formel I
AlRₘX₃₋ₘ (I)
worin der Index und die Variablen die folgende Bedeutung haben:
R C₁- bis C₁₈-Kohlenwasserstoffrest,
X Rest OR, Chlor, Brom und Wasserstoff und
m Zahl von 1 bis 3;
und
C) einer Organohalogen-Katalysatorkomponente
besteht, dadurch gekennzeichnet, daß die Katalysatorkomponente (C) 1,1,1-Trichlorethan enthält oder hieraus besteht, wobei in dem Ziegler-Katalysatorsystem (A, B, C) das Atomverhältnis von Übergangsmetall aus der Katalysatorkomponente (A) zu Aluminium aus der Katalysatorkomponente (B) bei 1:0,5 bis 1:100 und das Molverhältnis von Katalysatorkomponente (B) zur Katalysatorkomponente (C) bei 1:0,003 bis 1:0,3 liegt.

2. Das Ziegler-Katalysatorsystem nach Anspruch 1, dadurch gekennzeichnet, daß die Komponente (C) mindestens 25 mol-% 1,1,1-Trichlorethan, bezogen auf die Komponente (C), enthält.

3. Das Ziegler-Katalysatorsystem nach Anspruch 2, dadurch gekennzeichnet, daß die Katalysatorkomponente (C) Chloroform enthält.

4. Das Ziegler-Katalysatorsystem nach Anspruch 3, dadurch gekennzeichnet, daß die Katalysatorkomponente (C) aus 1,1,1-Trichlorethan und Chloroform besteht, welche im Molverhältnis von 1:3 bis 3:1 vorliegen.

5. Verfahren zur Herstellung von Homopolymerisaten des Ethylens sowie von Copolymerisaten des Ethylens mit untergeordneten Mengen an C₃- bis C₈-α-Monoolefinen durch (Co)Polymerisation der Monomeren bei Temperaturen von 30 bis 200°C und Drücken von 1 bis 200 bar, dadurch gekennzeichnet, daß man hierbei ein Ziegler-Katalysatorsystem (A, B, C) gemäß einem der Ansprüche 1 bis 4 verwendet.

## Patentansprüche (Patentansprüche für folgende(n) Vertragsstaat(en): ES)

1. Verfahren zur Herstellung von Homopolymerisaten des Ethylens sowie von Copolymerisaten des Ethylens mit untergeordneten Mengen an C₃- bis C₈-α-Monoolefinen durch (Co)Polymerisation der Monomeren bei Temperaturen von 30 bis 200°C und Drücken von 1 bis 200 bar, bei weichem man ein Ziegler-Katalysatorsystem (A, B, C) verwendet, welches aus
A) einer Übergangsmetall-Katalysatorkomponente,
B) einer Organoaluminium-Katalysatorkomponente der allgemeinen Formel I
AlRₘX₃₋ₘ (I)
worin der Index und die Variablen die folgende Bedeutung haben:
R C₁- bis C₁₈-Kohlenwasserstoffrest,
X Rest OR, Chlor, Brom und Wasserstoff und
m Zahl von 1 bis 3;
und
C) einer Organohalogen-Katalysatorkomponente
besteht, dadurch gekennzeichnet, daß die Katalysatorkomponente (C) 1,1,1-Trichlorethan enthält oder hieraus besteht, wobei in dem Ziegler-Katalysatorsystem (A, B, C) das Atomverhältnis von Übergangsmetall aus der Katalysatorkomponente (A) zu Aluminium aus der Katalysatorkomponente (B) bei 1:0,5 bis 1:100 und das Molverhältnis von Katalysatorkomponente (B) zur Katalysatorkomponente (C) bei 1:0,003 bis 1:0,3 liegt.

2. Das Verfahren nach Anspruch 1, dadurch gekennzeichnet, daß die Komponente (C) mindestens 25 mol-% 1,1,1-Trichlorethan, bezogen auf die Komponente (C), enthält.

3. Das Verfahren nach Anspruch 2, dadurch gekennzeichnet, daß die Katalysatorkomponente (C) Chloroform enthält.

4. Das Verfahren nach Anspruch 3, dadurch gekennzeichnet, daß die Katalysatorkomponente (C) aus 1,1,1-Trichlorethan und Chloroform besteht, welche im Molverhältnis von 1:3 bis 3:1 vorliegen.

## Claims (Claims for the following Contracting State(s): BE, DE, FR, GB, IT, NL, SE)

1. A Ziegler catalyst system for the homo- and copolymerization of ethylene, which consists of
A) a transition metal catalyst component,
B) an organoaluminum catalyst component of the formula I
AlRₘX₃₋ₘ (I)
where R is a C₁-C₁₈-hydrocarbon radical, X is OR, chlorine, bromine or hydrogen and m is from 1 to 3, and
C) an organohalogen catalyst component,
wherein the catalyst component (C) contains or consists of 1,1,1-trichloroethane, in the Ziegler catalyst system (A, B, C), the atomic ratio of transition metal from the catalyst component (A) to aluminum from the catalyst component (B) being from 1 : 0.5 to 1 : 100 and the molar ratio of catalyst component (B) to catalyst component (C) being from 1 : 0.003 to 1 : 0.3.

2. A Ziegler catalyst system as claimed in claim 1, wherein the component (C) contains not less than 25 mol % of 1,1,1-trichloroethane, based on the component (C).

3. A Ziegler catalyst system as claimed in claim 2, wherein the catalyst component (C) contains chloroform.

4. A Ziegler catalyst system as claimed in claim 3, wherein the catalyst component (C) consists of 1,1,1-trichloroethane and chloroform, which are present in the molar ratio of from 1 : 3 to 3 : 1.

5. A process for the preparation of a homopolymer of ethylene or of a copolymer of ethylene with minor amounts of C₃-C₈-α-monoolefins by (co)polymerization of the monomers at from 30 to 200°C and from 1 to 200 bar, wherein a Ziegler catalyst system (A, B, C) as claimed in claim 1 or 2 or 3 or 4 is used.

## Claims (Claims for the following Contracting State(s): ES)

1. A process for the preparation of a homopolymer of ethylene or of a copolymer of ethylene with minor amounts of C₃-C₈-α-monoolefins by (co)polymerization of the monomers at from 30 to 200°C and from 1 to 200 bar, in which use is made of a Ziegler catalyst system (A, B, C) which consists of
A) a transition metal catalyst component,
B) an organoaluminum catalyst component of the formula I
AlRₘX₃₋ₘ (I)
where R is a C₁-C₁₈-hydrocarbon radical, X is OR, chlorine, bromine or hydrogen and m is from 1 to 3, and
C) an organohalogen catalyst component,
wherein the catalyst component (C) contains or consists of 1,1,1-trichloroethane, in the Ziegler catalyst system (A, B, C), the atomic ratio of transition metal from the catalyst component (A) to aluminum from the catalyst component (B) being from 1 : 0.5 to 1 : 100 and the molar ratio of catalyst component (B) to catalyst component (C) being from 1 : 0.003 to 1 : 0.3.

2. A process as claimed in claim 1, wherein the component (C) contains not less than 25 mol % of 1,1,1-trichloroethane, based on the component (C).

3. A process as claimed in claim 2, wherein the catalyst component (C) contains chloroform.

4. A process as claimed in claim 3, wherein the catalyst component (C) consists of 1,1,1-trichloroethane and chloroform, which are present in the molar ratio of from 1 : 3 to 3 : 1.

## Revendications (Revendications pour l'(les) Etat(s) contractant(s) suivant(s): BE, DE, FR, GB, IT, NL, SE)

1. Système catalyseur de Ziegler pour l'homo- et la copolymérisation de l'éthylène, qui est constitué
A) d'un constituant catalyseur à base d'un métal de transition,
B) d'un constituant catalyseur à base d'un composé organique de l'aluminium, de formule générale I
AlRₘX₃₋ₘ (I)
dans laquelle l'indice et les variables ont les significations suivantes :
R est un radical hydrocarboné en C₁ à C₁₈,
X est un radical OR ou le radical chloro, bromo ou un hydrogène, et
m est un nombre de 1 à 3 ; et
C) d'un constituant catalyseur à base d'un composé organique halogéné,
caractérisé en ce que le constituant catalyseur (C) contient du 1,1,1-trichloroéthane ou en est constitué, auquel cas, dans le système catalyseur de Ziegler (A, B, C), le rapport en atomes du métal de transition provenant du constituant catalyseur (A) à l'aluminium provenant du constituant catalyseur (B) est de 1:0,5 à 1:100, le rapport en moles du constituant catalyseur (B) au constituant catalyseur (C) étant de 1:0,003 à 1:0,3.

2. Système catalyseur de Ziegler selon la revendication 1, caractérisé en ce que le constituant (C) contient au moins 25 % en moles de 1,1,1-trichloroéthane par rapport au constituant (C).

3. Système catalyseur de Ziegler selon la revendication 2, caractérisé en ce que le constituant catalyseur (C) contient du chloroforme.

4. Système catalyseur de Ziegler selon la revendication 3, caractérisé en ce que le constituant catalyseur (C) est constitué de 1,1,1-trichloroéthane et de chloroforme, qui sont présents selon un rapport en moles de 1:3 à 3:1.

5. Procédé de préparation d'homopolymères de l'éthylène et de copolymères de l'éthylène, avec des quantités minimes d'α-monooléfines en C₃ à C₈, par (co)polymérisation des monomères à des températures de 30 à 200°C sous des pressions de 1 à 200 bar, caractérisé en ce qu'on utilise alors un système catalyseur de Ziegler (A, B, C) selon l'une des revendications 1 à 4.

## Revendications (Revendications pour l'(les) Etat(s) contractant(s) suivant(s): ES)

1. Procédé de préparation d'homopolymères de l'éthylène et de copolymères de l'éthylène, avec des quantités minimes d'α-monooléfines en C₃ à C₈, par (co)polymérisation des monomères à des températures de 30 à 200°C sous des pressions de 1 à 200 bar, dans lequel on utilise un système catalyseur de Ziegler (A, B, C), qui est constitué
A) d'un constituant catalyseur à base d'un métal de transition,
B) d'un constituant catalyseur à base d'un composé organique de l'aluminium, de formule générale I
AlRₘX₃₋ₘ (I)
dans laquelle l'indice et les variables ont les significations suivantes :
R est un radical hydrocarboné en C₁ à C₁₈,
X est un radical OR ou le radical chloro, bromo ou un hydrogène, et
m est un nombre de 1 à 3 ; et
C) d'un constituant catalyseur à base d'un composé organique halogéné,
caractérisé en ce que le constituant catalyseur (C) contient du 1,1,1-trichloroéthane ou en est constitué, auquel cas, dans le système catalyseur de Ziegler (A, B, C), le rapport en atomes du métal de transition provenant du constituant catalyseur (A) à l'aluminium provenant du constituant catalyseur (B) est de 1:0,5 à 1:100, le rapport en moles du constituant catalyseur (B) au constituant catalyseur (C) étant de 1:0,003 à 1:0,3.

2. Procédé selon la revendication 1, caractérisé en ce que le constituant (C) contient au moins 25 % en moles de 1,1,1-trichloroéthane par rapport au constituant (C).

3. Procédé selon la revendication 2, caractérisé en ce que le constituant catalyseur (C) contient du chloroforme.

4. Procédé selon la revendication 3, caractérisé en ce que le constituant catalyseur (C) est constitué de 1,1,1-trichloroéthane et de chloroforme, qui sont présents selon un rapport en moles de 1:3 à 3:1.
